# EUROPEAN PATENT APPLICATION

(11) **EP 2 221 552 A2**
(43) Date of publication of application: **25.08.2010**
(21) Application number: 10153667.0
(22) Date of filing: 16.02.2010
(51) Int. Cl.: F24J 2/06, F24J 2/14, F24J 2/54

(54) **Rotational Trough Reflector Array with Solid Optical Element for Solar-Electricity Generation**

(30) Priority: 18.02.2009 US 388500; 27.05.2009 US 473240; 03.11.2009 US 611842
(71) Applicant: Palo Alto Research Center Incorporated, Palo Alto, California 94304 (US)
(72) Inventor: Littau, Karl A, Palo Alto, CA 94306 (US); Maeda, Patrick Y, Mountain View, CA 94040 (US); Cheung, Patrick C, Castro Valley, CA 94552 (US)
(74) Representative: Skone James, Robert Edmund

(57) **Abstract**

A rotational trough reflector (101) solar-electricity generation device includes a trough reflector that rotates around a substantially vertical axis and includes a solid optical element (110) having a linear parabolic convex surface (115) that serves as a base for automatically positioning a mirror (130) to focus sunlight onto a focal line, and a flat aperture surface (112) that serves to support a strip-type photovoltaic (PV) receiver (120) on the focal line. A tracking system (140) rotates the trough reflector (101) such that the trough reflector is aligned generally parallel to the incident sunlight (e.g., in a generally east-west direction at sunrise, turning to generally north-south at noon, and turning generally west-east at sunset). A disc-shaped support structure is used to distribute the reflector's weight over a larger area and to minimize the tracking system motor size. Multiple trough reflectors are mounted on the disc-shaped support to maximize power generation.

## Description

The present invention relates generally to an improvement in solar-electricity generation, and more particularly to an improved trough reflector-type solar-electricity generation device that is suitable for either residential rooftop-mounted applications or commercial applications.

The need for "green" sources of electricity (i.e., electricity not produced by petroleum-based products) has given rise to many advances in solar-electricity generation for both commercial and residential applications.

Solar-electricity generation typically involves the use of photovoltaic (PV) elements (solar cells) that convert sunlight directly into electricity. These solar cells are typically made using square or quasi-square silicon wafers that are doped using established semiconductor fabrication techniques and absorb light irradiation (e.g., sunlight) in a way that creates free electrons, which in turn are caused to flow in the presence of a built-in field to create direct current (DC) power. The DC power generated by an array including several solar cells is collected on a grid placed on the cells.

Solar-electricity generation is currently performed in both residential and commercial settings. In a typical residential application, a relatively small array of solar cells is mounted on a house's rooftop, and the generated electricity is typically supplied only to that house. In commercial applications, larger arrays are disposed in sunlit, otherwise unused regions (e.g., deserts), and the resulting large amounts of power are conveyed by power lines to businesses and houses over power lines. The benefit of mounting solar arrays on residential houses is that the localized generation of power reduces losses associated with transmission over long power lines, and requires fewer resources (i.e., land, power lines and towers, transformers, etc.) to distribute the generated electricity in comparison to commercially-generated solar-electricity. However, as set forth below, current solar-electricity generation devices are typically not economically feasible in residential settings.

Solar-electricity generation devices can generally be divided in to two groups: flat panel solar arrays and concentrating-type solar devices. Flat panel solar arrays include solar cells that are arranged on large, flat panels and subjected to unfocused direct and diffuse sunlight, whereby the amount of sunlight converted to electricity is directly proportional to the area of the solar cells. In contrast, concentrating-type solar devices utilize an optical element that focuses (concentrates) mostly direct sunlight onto a relatively small solar cell located at the focal point (or line) of the optical element.

Flat panel solar arrays have both advantages and disadvantages over concentrating-type solar devices. An advantage of flat panel solar arrays is that their weight-to-size ratio is relatively low, facilitating their use in residential applications because they can be mounted on the rooftops of most houses without significant modification to the roof support structure. However, flat panel solar arrays have relatively low efficiencies (i.e., approximately 15%), which requires large areas to be covered in order to provide sufficient amounts of electricity to make their use worthwhile. Thus, due to the high cost of silicon, current rooftop flat panel solar arrays cost over $5 per Watt, so it can take 25 years for a home owner to recoup the investment by the savings on his/her electricity bill. Economically, flat panel solar arrays are not a viable investment for a typical homeowner without subsidies.

By providing an optical element that focuses (concentrates) sunlight onto a solar cell, concentrating-type solar arrays avoid the high silicon costs of flat panel solar arrays, and may also exhibit higher efficiency through the use of smaller, higher efficiency solar cells. The amount of concentration varies depending on the type of optical device, and ranges from 10X to 100X for trough reflector type devices (described in additional detail below) to as high as 600X to 10,000X using some cassegrain-type solar devices. However, a problem with concentrating-type solar devices in general is that the orientation of the optical element must be continuously adjusted using a tracking system throughout the day in order to maintain peak efficiency, which requires a substantial foundation and motor to support and position the optical element, and this structure must also be engineered to withstand wind and storm forces. Moreover, higher efficiency (e.g., cassegrain-type) solar devices require even higher engineering demands on reflector material, reflector geometry, and tracking accuracy. Due to the engineering constraints imposed by the support/tracking system, concentrating-type solar devices are rarely used in residential settings because the rooftop of most houses would require substantial retrofitting to support their substantial weight. Instead, concentrating-type solar devices are typically limited to commercial settings in which cement or metal foundations are disposed on the ground.

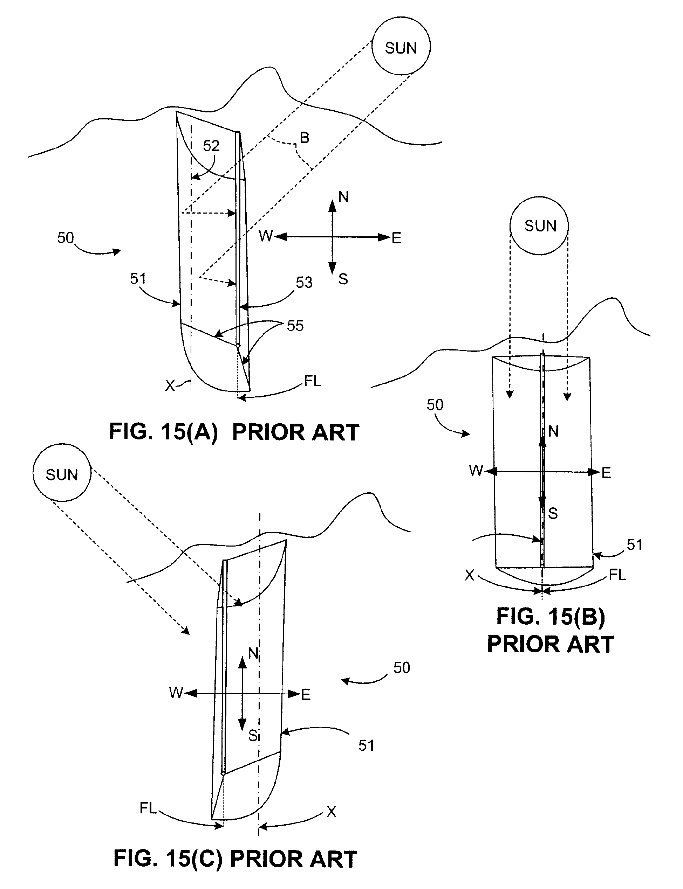

Figs. 15(A) to 15(C) are simplified perspective views showing a conventional trough reflector solar-electricity generation device 50, which represents one type of conventional concentrating-type solar device. Device 50 generally includes a trough reflector 51, having a mirrored (reflective) surface 52 shaped to reflect solar (light) beams B onto a focal line FL, an elongated photoreceptor 53 mounted in fixed relation to trough reflector 51 along focal line FL by way of support arms 55, and a tracking system (not shown) for supporting and rotating trough reflector 51 around a horizontal axis X that is parallel to focal line FL. In conventional settings, trough reflector 51 is positioned with axis X aligned in a north-south direction, and as indicated in Figs. 15(A) to 15(C), the tracking system rotates trough reflector 51 in an east-to-west direction during the course of the day such that beams B are directed onto mirror surface 52. As mentioned above, a problem with this arrangement in a residential setting is that the tracking system (i.e., the support structure and motor needed to rotate trough reflector 51) requires significant modifications to an average residential house rooftop. On the other hand, if the troughs are made small and are packed together side by side, and multiple troughs driven from one motor, then there is an engineering difficulty to keep the multiple hinges and linkages to pivot together to precisely focus sunlight.

What is needed is an economically viable residential rooftop-mounted solar-electricity generation system that overcomes the problems associated with conventional solar-electricity generation systems set forth above. In particular, what is needed is a solar-electricity generation device that utilizes less PV material than conventional flat panel solar arrays, and avoids the heavy, expensive tracking systems of conventional concentrating-type solar devices.

The present invention is directed to solar-energy collection (e.g., a solar-electricity generation) device (apparatus) in which a trough reflector is rotated by a tracking system around an axis that is substantially orthogonal (e.g., generally vertical) to an underlying support surface, and non-parallel (e.g., perpendicular) to the linear solar energy collection element or focal line defined by the trough reflector (i.e., not horizontal as in conventional trough reflector systems), and in which the tracking system aligns the trough reflector generally parallel to incident solar beams (e.g., aligned in a generally east-west direction at sunrise, not north/south as in conventional trough reflector systems). By using the moderate solar concentration provided by the trough reflector, the amount of PV (or other solar energy collection) material required by the solar-electricity generation device is reduced roughly ten to one hundred times over conventional solar panel arrays. In addition, by rotating the trough reflector around an axis that is perpendicular to the focal line, the trough reflector remains in-plane with or in a fixed, canted position relative to an underlying support surface (e.g., the rooftop of a residential house), thereby greatly reducing the engineering demands on the strength of the support structure and the amount of power required to operate the tracking system, avoiding the problems associated with adapting commercial trough reflector devices, and providing an economically viable solar-electricity generation device that facilitates residential rooftop implementation.

According to an aspect of the present invention, the trough reflector includes a solid transparent (e.g., glass or clear plastic) optical element having a predominately flat upper aperture surface and a convex lower surface, a linear solar energy collection element (e.g., a string of photovoltaic cells) mounted on the upper aperture surface, and a curved reflective mirror that is deposited on or otherwise conforms to the convex lower surface. The convex lower surface and the curved reflective mirror have a linear parabolic shape and are arranged such that sunlight passing through the flat upper aperture surface is reflected and focused by the mirror (whose reflective surface faces into the optical element) onto a focal line that coincides with a linear region of the upper aperture surface upon which the linear solar energy collection element is mounted. The use of the optical element provides several advantages over conventional trough reflector arrangements. First, by producing the optical element using a material having an index of refraction in the range of 1.05 and 2.09 (and more preferably in the range of 1.15 to 1.5), the optical element reduces deleterious end effects by causing the refracted light to transit the optical element more normal to the array, thus reducing the amount of poorly or non-illuminated regions at the ends of the linear solar energy collection element. Second, because the optical element is solid (i.e., because the aperture and convex mirror surfaces remain fixed relative to each other), the mirror and solar energy collection element remain permanently aligned, thus maintaining optimal optical operation while minimizing maintenance costs. A third advantage is the ability to reduce the normal operating cell temperature (NOCT) of photovoltaic-based (PV-based) solar energy collection element. Moreover, because the mirror conforms to the convex surface, the loss of light at gas/solid interfaces is minimized because only solid optical element material (e.g., plastic or low-iron glass) is positioned between the aperture surface and convex surface/mirror, and between the convex surface/mirror and the solar energy collection element. This arrangement also minimizes maintenance because the active surface of the solar energy collection element and the mirror surface are permanently protected from dirt and corrosion by the solid optical element material, leaving only the relatively easy to clean flat upper aperture surface exposed to dirt and weather. A fifth advantage is the reduced profile, height, and cost of manufacture of the array. In accordance with an embodiment of the invention, the mirror is a metal film that is directly formed (e.g., sputter deposited or plated) onto the convex surface of the optical element. By carefully molding the optical element to include convex and aperture surfaces having the desired shape and position, the mirror is essentially self-forming and self-aligned when formed as a mirror material film, thus greatly simplifying the manufacturing process and minimizing production costs. Alternately, the mirror includes a reflective film that is adhesively or otherwise mounted to the back of the reflector, which provides self-aligned and self-forming advantages that are similar to that of directly formed mirrors, and includes even further reduced cost at the expense of slightly lower reflectivity.

According to a specific embodiment of the present invention, multiple trough reflectors are mounted onto a disc-shaped support structure that is rotated by a motor mounted on the peripheral edge of the support structure. The weight of the trough reflectors is spread by the disc-shaped support structure over a large area, thereby facilitating rooftop mounting in residential applications. A relatively small motor coupled, e.g., to the peripheral edge of the disc-shaped support substrate turns the support structure using very little power in comparison to that needed in conventional trough reflector arrangements. PV elements mounted onto each trough reflector are connected in series using known techniques to provide maximum power generation. The low profile of the disc-shaped support and the in-plane rotation of the trough reflectors reduce the chance of wind and storm damage in comparison to conventional trough reflector arrangements. In one embodiment, the trough reflectors are mounted on a platen that is removably mounted onto a turntable. In accordance with an alternative embodiment, multiple equal-length trough reflectors are removably mounted on a square frame that is supported on a rotatable support structure, thereby providing an arrangement in which the PV receivers of all of the trough reflectors generate electricity having a similar voltage, and in which individual trough reflectors are conveniently replaceable. In yet another alternative embodiment, similar voltages are achieved using dissimilar length troughs by providing each trough with the same number of cells, but making the cells proportionally shorter in the shorter troughs.

According to another specific embodiment of the present invention, multiple trough reflectors are mounted onto a disc-shaped support structure that is supported in a raised, angled position by a vertical support shaft that is turned by a motor such that the trough reflectors are directed to face the sun. Although raising and tilting the plane defined by the trough reflector support potentially increases wind effects over the perpendicular arrangement, the raised arrangement may provide better solar light conversion that may be useful in some commercial applications. In one specific embodiment, a separate drive motor is provided to raise/lower the angled position of the trough reflector, thereby facilitating, for example, compensation for latitude and the resulting non-ideal zenith angle.

According to various additional alternative embodiments of the present invention, the optical element is a substantially cylindrical section having a cross-sectional width of approximately one inch. In one specific embodiment, the optical element includes parallel vertical side edges that separate the aperture and convex surfaces, and has a maximum thickness of 0.375". In a low profile embodiment, the aperture and convex surfaces intersect at a point, and the optical element has a maximum thickness of 0.25". Another alternative embodiment would involve splitting the low profile element in half so that the split element would collect and concentrate light on an angled receiver placed on one edge of the element. In yet another embodiment, one or both of the aperture and convex surfaces are modified such that the solar energy collection element is disposed above or below the true focus of the parabolic mirror in order to more uniformly and fully illuminate the receiver. In yet another embodiment, the parabolic mirror and convex surface includes a faceted surface for the incident light in order to restrict the concentration factor to no greater than a desired amount regardless of misalignment of the array, tracking system, or placement of the solar energy collection element.

According to another embodiment of the present invention, a trough reflector includes an optical element in which the upper aperture surface is formed by a stepped series of parallel surface sections. This arrangement reduces the amount of material (e.g., polymer) needed to form the optical element.

According to another embodiment of the present invention, a trough reflector includes a second mirror disposed along the linear central region of the upper aperture surface. The second mirror is shaped and positioned such that sunlight passing through the aperture surface is reflected by the lower (primary) mirror onto the second mirror, which subsequently reflects this sunlight toward a central region of the convex surface. In addition, the solar-energy collection element is disposed adjacent to the central region of the convex surface (e.g., disposed in a groove or mounted on or below the convex surface) such that the light reflected by the second mirror is focused onto the solar-energy collection element. This arrangement adds complexity, cost, and optical losses, but provides more room for a heat sink located below the panel, and affords easier access to the top of the panel for cleaning (e.g., no heat sink fins sticking up that may impede the cleaning process).

These and other features, aspects and advantages of the present invention will become better understood with regard to the following description, appended claims, and accompanying drawings, where:

Figs. 1(A) and 1(B) are exploded perspective and top side perspective views showing a solar-electricity generation apparatus according to a generalized embodiment of the present invention;

Figs. 2(A) and 2(B) are simplified cross-sectional end and side views showing a trough reflector of the apparatus of Fig. 1 during operation;

Fig. 3 is a perspective top view showing the apparatus of Fig. 1 disposed on the rooftop of a residential house;

Figs. 4(A), 4(B) and 4(C) are simplified perspective views showing a method for positioning the trough reflector of Fig. 1 during operation according to an embodiment of the present invention;

Fig. 5 is a top side perspective view showing a solar-electricity generation apparatus according to another embodiment of the present invention;

Figs. 6(A), 6(B) and 6(C) are simplified top views showing the apparatus of Fig. 5 during operation;

Figs. 7(A) and 7(B) are top side perspective views showing solar-electricity generation apparatus according to alternative embodiments of the present invention;

Figs. 8(A), 8(B) and 8(C) are simplified top views showing the apparatus of Fig. 7 during operation;

Figs. 9(A), 9(B) and 9(C) are simplified perspective views showing a solar-electricity generation apparatus according to another embodiment of the present invention;

Figs. 10(A) and 10(B) are simplified perspective views showing a solar-electricity generation apparatus with tilt mechanism according to another embodiment of the present invention;

Fig. 11 is a perspective view showing a solar-electricity generation apparatus according to yet another embodiment of the present invention;

Figs. 12(A), 12(B), 12(C) and 12(D) are simplified cross-sectional end views showing solid optical elements according to alternative embodiments of the present invention;

Fig. 13 is a simplified cross-sectional end view showing a solar-electricity generation apparatus according to yet another embodiment of the present invention;

Figs. 14(A), 14(B) and 14(C) are simplified cross-sectional end views showing solid optical elements according to alternative embodiments of the present invention; and

Figs. 15(A), 15 (B) and 15 (C) are simplified perspective views showing a conventional trough reflector solar-electricity generation device during operation.

The present invention relates to an improvement in solar-energy collection devices. The following description is presented to enable one of ordinary skill in the art to make and use the invention as provided in the context of a particular application and its requirements. As used herein, directional terms such as "vertical" and "horizontal" are intended to provide relative positions for purposes of description, and are not intended to designate an absolute frame of reference. Various modifications to the preferred embodiment will be apparent to those with skill in the art, and the general principles defined herein may be applied to other embodiments. Therefore, the present invention is not intended to be limited to the particular embodiments shown and described, but is to be accorded the widest scope consistent with the principles and novel features herein disclosed.

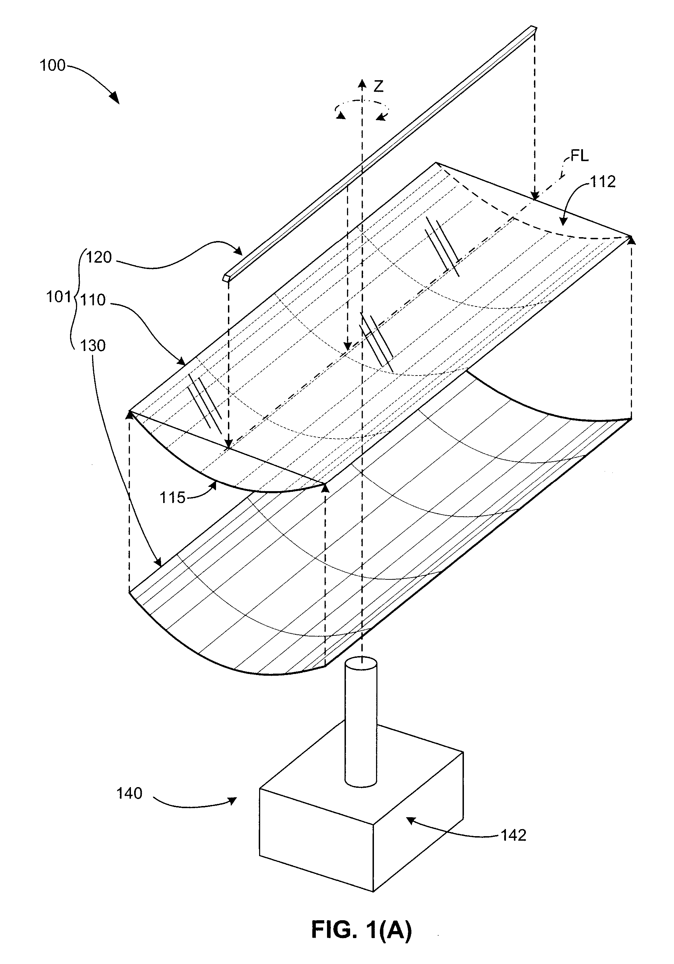

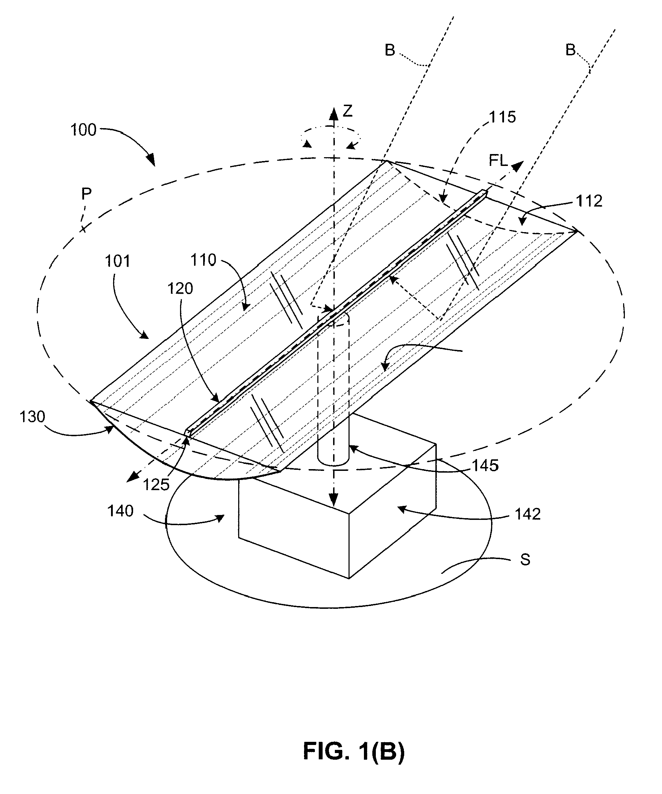

Figs. 1(A) and 1(B) are simplified exploded and assembled perspective views showing a solar-electricity generation device (apparatus) 100, which represents one form of solar-energy collection device according to a generalized embodiment of the present invention. As indicated in Fig. 1(B), similar to conventional trough-type solar collectors (e.g., such as those described above with reference to Figs. 15(A) to 15(C)), device 100 generally includes a trough reflector 101 having a parabolic trough mirror 130 shaped to reflect solar (light) beams B onto a photovoltaic (PV) receiver (solar-energy collection element) 120 that is disposed on a focal line FL of mirror 130, and a tracking system 140 that moves trough reflector 101 into an optimal position for receiving beams B. However, device 100 differs from conventional trough-type solar collectors in two main respects: first, trough reflector 101 includes a solid optical element 110 upon which both PV receiver 120 and mirror 130 are fixedly connected; and second, tracking system 140 rotates (or pivots) trough reflector 101 around an axis Z that is non-parallel to focal line FL (i.e., non-parallel to the plane defined by upper aperture surface 112).

Referring to Figs. 1(A) and 1(B), trough reflector 101 generally includes a solid transparent optical element 110 having a predominately flat upper aperture surface 112 and a convex (linear parabolic) lower surface 115, PV receiver 120, which is mounted on aperture surface 112, and mirror 130, which conforms to convex lower surface 115.

Solid transparent optical element 110 includes an integrally molded, extruded or otherwise formed single-piece element made of a clear transparent optical material such as low lead glass, a clear polymeric material such as silicone, polyethylene, polycarbonate or acrylic, or another suitable transparent material having characteristics described herein with reference to optical element 110. The cross-sectional shape of optical element 110 remains constant along its entire length, with upper aperture surface 112 being substantially flat (planar) in order to admit light with minimal reflection, and convex lower surface 115 being provided with a parabolic trough (linear parabolic) shape. In one specific embodiment, optical element 110 is molded using a low-iron glass (e.g., Optiwhite glass produced by Pilkington PLC, UK) structure according to known glass molding methods. Molded low-iron glass provides several advantages over other production methods and materials, such as superior transmittance and surface characteristics (molded glass can achieve near perfect shapes due to its high viscosity, which prevents the glass from filling imperfections in the mold surface). The advantages described herein may be also achieved by optical elements formed using other light-transmitting materials and other fabrication techniques. For example, clear plastic (polymer) may be machined and polished to form single-piece optical element 110, or separate pieces by be glued or otherwise secured to form optical element 110. In another embodiment, polymers are molded or extruded in ways known to those skilled in the art that reduce or eliminate the need for polishing while maintaining adequate mechanical tolerances, thereby providing high performance optical elements at a low production cost.

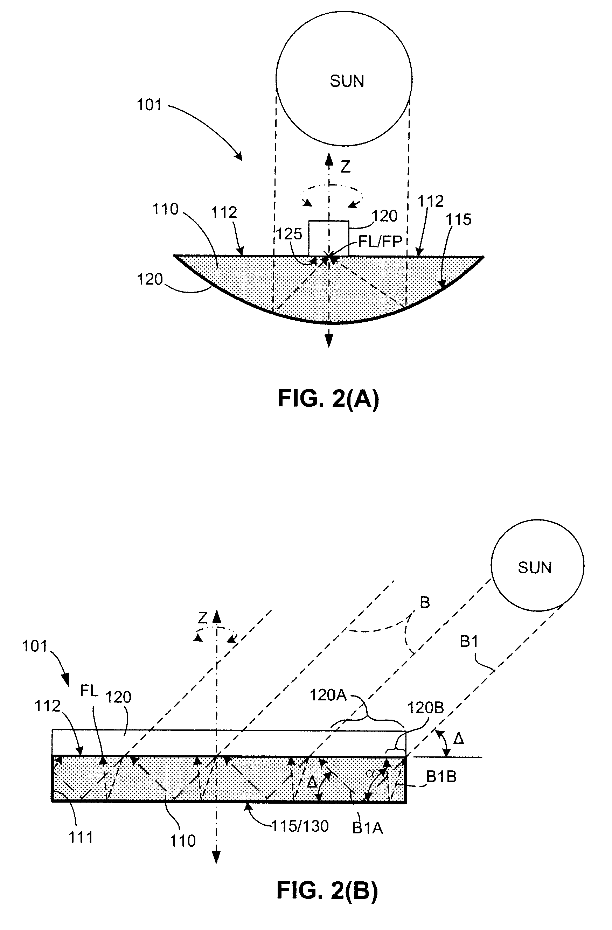

According to another aspect of the invention, mirror 130 is deposited on or otherwise conformally fixedly disposed onto convex lower surface 115 such that the reflective surface of mirror 130 faces into optical element 110 and focuses reflected sunlight onto a predetermined focal line FL. As used herein, the phrase "conformally fixedly disposed" is intended to mean that no air gap exists between mirror 130 and convex lower surface 115. That is, the reflective surface of mirror 130 has substantially the same linear parabolic shape and position as that of convex lower surface 115. In addition, the term "focal line FL" describes the loci of the focal points FP generated along the entire length of parabolic trough mirror 130. In the disclosed embodiment shown in Fig. 2(A), sunlight beams B passing through flat upper aperture surface 112 are reflected and focused by the mirror 130 onto focal line FL, which substantially coincides with a central linear region of upper aperture surface 112. In another embodiment, mirror 130 may be set such that the resulting focal line occurs along another linear region having a predetermined fixed relationship to (i.e., above or below) aperture surface 112).

In one specific embodiment of the present invention, mirror 130 is fabricated by sputtering or otherwise depositing a reflective mirror material (e.g., silver (Ag) or aluminum (Al)) directly onto convex surface 115, thereby minimizing manufacturing costs and providing superior optical characteristics. By sputtering or otherwise conformally disposing a mirror film on convex surface 115 using a known mirror fabrication technique, primary mirror 130 automatically takes the shape of convex surface 115. As such, by molding, extruding or otherwise forming optical element 110 such that convex surface 115 is arranged and shaped to produce the desired mirror shape of mirror 130, the fabrication of mirror 130 is effectively self-forming and self-aligned, thus eliminating expensive assembly and alignment costs associated with conventional trough reflectors. Further, by conformally disposing mirror 130 on convex lower surface 115 in this manner, the resulting linear parabolic shape and position of mirror 130 are automatically permanently set at the desired optimal optical position. That is, because primary mirror 130 remains affixed to optical element 110 after fabrication, the position of mirror 130 relative to aperture surface 112 is permanently set, thereby eliminating the need for adjustment or realignment that may be needed in conventional multiple-part arrangements. In another embodiment, mirror 130 includes a separately formed reflective, flexible (e.g., polymer) film that is adhesively or otherwise mounted (laminated) onto convex surface 115. Similar to the directly formed mirror approach, the film is substantially self-aligned to the convex surface during the mounting process. This production method may decrease manufacturing costs over directly formed mirrors, but may produce slightly lower reflectivity.

As shown in Fig. 1(B) and Fig. 2 (A), PV receiver 120 is fixedly disposed onto the central linear region of aperture surface 112 that coincides with focal line FL such that no air gap exists between PV receiver 120 and convex lower surface 115, and such that an active (sunlight receiving) surface 125 of PV receiver 120 faces into optical element 110. With this arrangement, substantially all of the concentrated (focused) sunlight reflected by mirror 130 is directed onto the active surface 125 of PV receiver 120. PV receiver 120 traverses the length of solid optical element 110, and is maintained in a fixed position relative to mirror 130 by its fixed connection to aperture surface 112. In one embodiment, PV receiver 120 is an elongated structure formed by multiple pieces of semiconductor (e.g., silicon) connected end-to-end, where each piece (strip) of semiconductor is fabricated using known techniques in order to convert the incident sunlight to electricity. The multiple semiconductor pieces are coupled by way of wires or other conductors (not shown) to adjacent pieces in a series arrangement. Although not specific to the fundamental concept of the present invention, PV receiver 120 comprises the same silicon photovoltaic material commonly used to build conventional solar panels, but attempts to harness 10X or more of electricity from the same active area. Other PV materials that are made from thin film deposition can also be used. When high efficiency elements become economically viable, such as those made from multi-junction processes, they can also be used in the configuration described herein.

In addition to the benefits set forth above, utilizing solid transparent optical element 110 in the production of trough reflector 101 provides several additional advantages over conventional trough reflectors (such as those shown and described above with reference to Figs. 15(A) to 15(C)).

First, by utilizing convex surface 115 to fabricate mirror 130 and aperture surface 112 to position PV receiver 120, once light enters into optical element 110 through aperture surface 112, the light passes solely through the optical material as it is reflected by mirror 130/convex surface 115 and focused onto PV receiver 120. As such, the light is subjected to only one air/solid interface (i.e., aperture surface 112), thereby minimizing losses that are otherwise experienced by conventional multi-part solar collectors. The single air/solid interface loss can be further lowered using an antireflection coating on aperture surface 112. This arrangement also minimizes maintenance because the reflective surface of mirror 130 and active surface 125 of PV receiver 120 are permanently protected from dirt and corrosion by solid optical element 110, leaving only the relatively easy to clean flat upper aperture surface 112 (and the non-active back side of PV receiver 120) exposed to dirt and weather.

Second, because optical element 110 is solid (i.e., because aperture surface 112 and convex surface 115 remain fixed relative to each other), mirror 130 and PV receiver 140 remain permanently aligned after assembly, thus maintaining optimal optical operation while minimizing maintenance costs. That is, by using a solid element to define mirror 130 and the same solid transparent support for mounting PV receiver 120, the relative positions of mirror 130 and PV receiver 120 are maintained more stably and reliably over time, and are less susceptible to manufacturing induced errors and changes due to exposure to varying outdoor conditions.

A third advantage is the ability to reduce the normal operating cell temperature (NOCT) of photovoltaic-based (PV-based) solar energy collection element 140. Solid optical element 110 lends itself to the formation of narrower mirrors 130 and narrower PV receivers 120 which will require less heat sinking per unit area, thereby maintaining low NOCTx. Also, the region above PV receivers is "free" space which could be used for heat sink fins (not shown) that rise vertically from the back PV receiver 120.

Yet another advantage associated with trough reflector 101 is the reduced profile, height, and cost of manufacture of arrays including multiple trough reflectors that are connected together in the manner described below. Narrow optical elements facilitate the production of low profile and light weight reflector units, especially if constructed from polymeric materials such as polycarbonate or acrylic. The low profile nature of the array would also afford high packing density during transport and storage, further reducing the total cost of installing the arrays.

As mentioned above, a second feature of solar-electricity generation device 100 that differs from conventional systems is that tracking system 140 rotates (or pivots) trough reflector 101 around an axis Z that is non-parallel to the plane defined by upper aperture surface 112 (e.g., in the disclosed embodiment, non-parallel to focal line FL). As indicated in Fig. 1(B), in accordance with an embodiment of the present invention, PV receiver 120 is disposed such that focal line FL is parallel to upper aperture surface 112 and to a support surface S upon which device 100 is mounted, and axis Z is perpendicular to aperture surface 112 and support surface S (and thus to focal line FL), whereby PV receiver 120 remains in a plane P that is parallel to an underlying support surface S. This arrangement greatly reduces the engineering demands on the structural strength and power required by tracking system 140 in comparison to commercial trough reflector devices, and, as described in additional detail below, provides an economically viable solar-electricity generation device that facilitates residential rooftop implementation.

In accordance with an aspect of the present invention, tracking system 140 detects the position of the sun relative to trough reflector 101, and rotates trough reflector 101 such that trough reflector 101 is generally parallel to the projection of the solar beams onto the plane of the array. According to the generalized embodiment shown in Fig. 1(B), tracking system 140 includes a motor 142 that is mechanically coupled to trough reflector 101 (e.g., by way of an axle 145) such that mechanical force (e.g., torque) generated by the motor 142 causes trough reflector 101 to rotate around axis Z. Tracking system 140 also includes a sensor (not shown) that detects the sun's position, and a processor or other mechanism for calculating an optimal rotational angle θ of trough reflector 101 around axis Z. Due to the precise, mathematical understanding of planetary and orbital mechanics, the tracking can be determined by strictly computational means once the system is adequately located. In one embodiment, a set of sensors including GPS and photo cells are used with a feedback system to correct any variations in the drive train. In other embodiments such a feedback system may not be necessary.

The operational idea is further illustrated with reference to Figs. 2 (A) and 2 (B) . Referring to Fig. 2(A), when trough reflector 101 is aligned parallel to the sun ray's that are projected onto device 100, the sun's ray will be reflected off mirror 130 and onto PV receiver 120 as a focused line. The concept is similar to the textbook explanation of how parallel beams of light can be reflected and focused on to the focal point FP of a parabolic reflector, except that the parallel beams rise from below the page in Fig. 2(A), and the reflected rays emerge out of the page onto focal line FL (which is viewed as a point in Fig. 2(A), and is shown in Fig. 2(B)).

The concentration scheme depicted in Figs. 2(A) and 2(B) provides several advantages over conventional approaches. In comparison to convention cassegrain-type solar devices having high concentration ratios (e.g., 600X to 10,000X), the target ratio of 10X to 100X associated with the present invention reduces the engineering demands on reflector material, reflector geometry, and tracking accuracy. Conversely, in comparison to the high silicon costs of conventional flat panel solar arrays, achieving even a moderate concentration ratio (i.e., 25X) is adequate to bring the portion of cost of silicon photovoltaic material needed to produced PV receiver 120 to a small fraction of overall cost of device 100, which serves to greatly reduce costs over conventional flat panel solar arrays.

The side view shown in Fig. 2(B) further illustrates how sunlight directed parallel to focal line FL at a non-zero incident angle will still reflect off trough reflector 101 and will focus onto PV receiver 120. A similar manner of concentrating parallel beams of light can also be implemented by having the beams pass through a cylindrical lens, cylindrical Fresnel lens, or curved or bent cylindrical Fresnel lens but the location of the focal line will move toward the lens with increasing incidence angle of the sunlight due to the refractive properties of the lens and would degrade performance relative to a reflective system.

Fig. 2(B) also illustrates another benefit associated with the use of solid optical element 110. As indicated by the dashed-line arrows in Fig. 2(B), beams B (e.g., beam B1) enter optical element 110 at an angle Δ, which is determined by the position of the sun relative to trough reflector 101. As indicated by arrow B1A, in the absence of optical element 110, oblique light beam B1 is passed in a straight line to mirror 130, and is reflected at angle Δ, thereby preventing a relatively large section 120A on the end of PV receiver 120 from receiving full illumination. The size of non-illuminated region 120A is dependent on the geometry of mirror 130 and the solar elevation, but can be almost 1' for 1' wide troughs at 45 degree elevation, and substantially more for lower elevation solar illuminations. This will require a design that eliminates the PV cells near the edge, includes substantial bypass diodes, includes a complicated mechanism for adjusting the PV receiver, includes expensive switching elements, sacrifices morning or afternoon generation capability, or a combination of these and other undesirable mitigation strategies. In contrast, by providing optical element 110, trough reflector 101 reduces these deleterious end effects in that light beam B1 is refracted by optical element 110 to an angle α, which is reflected as beam B1B onto a region much closer to the end of PV receiver 120. That is, by producing optical element 110 using a higher index solid optical material, the refracted light inside optical element 110 transits optical element 110 more normal to the array, and reduces the size of poorly or un-illuminated region 120B. According to a specific embodiment, the present inventors have determined that an optimal index of refraction for optical element 110 is in the range of 1.05 and 2.09, and more preferably in the range of 1.15 to 1.5. Note that this range is in stark contrast to flat plate solar modules and other PV concentrator systems. In these other systems, the index of the transparent elements (such as the cover) is preferably as low as is possible to reduce Fresnel losses.

It general is advantageous to construct systems so that the PV elements are not placed in the poorly illuminated end region. Since this region is reduced by this invention, the loss of generating capability during the mid day hours is small, and the additional power capability in the morning and afternoon hours is quite substantial. However, an optional flat mirror 111 may be placed at the illuminated end of the trough reflector 101 (see the left side of Fig. 2(B)) to reflect light back to PV receiver 120 to facilitate making a length of PV receiver 120 substantially equal to the length of trough reflector 101. In this case the PV elements near the mirror's end can be hotter than most of the other elements when the incident solar beam is far from being perpendicular.

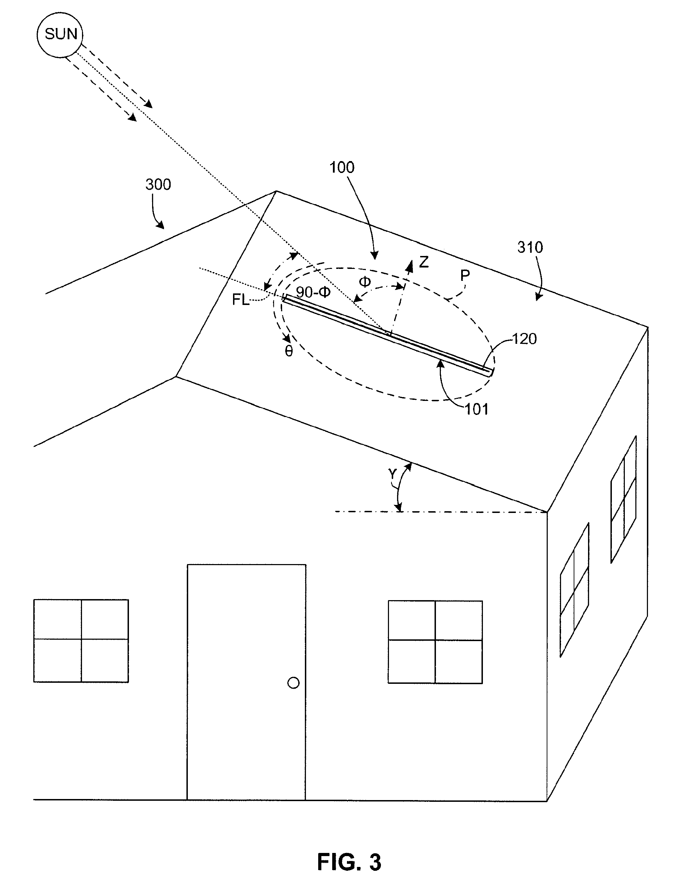

Fig. 3 is a perspective view depicting solar-electricity generation device 100 disposed on the planar rooftop (support surface) 310 of a residential house 300 having an arbitrary pitch angle γ. In this embodiment, device 100 is mounted with axis Z disposed substantially perpendicular planar rooftop 310 such that plane P defined by PV receiver 120 remains parallel to the plane defined by rooftop 310 as trough reflector 101 rotates around said axis Z. As depicted in this figure, a benefit of the present invention is that the substantially vertical rotational axis Z of device 100 allows tracking to take place in the plane of rooftop 310 of a residential house for most pitch angles γ. Further, because trough reflector 101 remains a fixed, short distance from rooftop 310, this arrangement minimizes the size and weight of the support structure needed to support and rotate device 100, thereby minimizing engineering demands on the foundation (i.e., avoiding significant retrofitting or other modification to rooftop 310).

Mathematically, as indicated in Fig. 3, for every position of the sun there exists one angle θ (and 180°+θ) around which reflector trough 101 rotates, such that the sun's ray will all focus onto PV receiver 120. Fig. 3 also illustrates that for any plane P there is a unique normal vector, and the incident angle of sunlight is measured off the normal as "Φ", and the two lines subtend an angle which is simply 90° - Φ. The projection line always exists, and so, no matter where and how trough reflector 101 is mounted, as long as PV receiver 120 rotates in plane P around the normal vector (i.e., axis Z), trough reflector 101 will eventually be positioned parallel to the projection line, and hence PV concentration will be carried out properly.

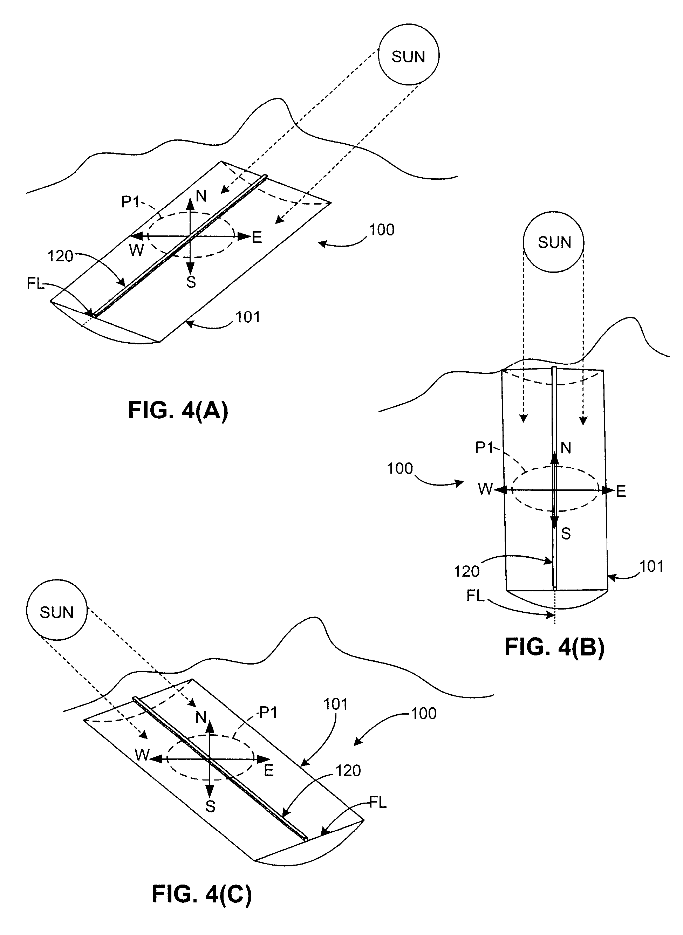

Figs. 4(A) to 4(C) are simplified perspective diagrams depicting device 100 in operation during the course of a typical day in accordance with an embodiment of the present invention. In particular, Figs. 4(A) to 4(C) illustrate the rotation of trough reflector 101 such that PV receiver 120 (and focal line FL) remains in plane P, and such that PV receiver 120 (and focal line FL) is aligned parallel to the incident sunlight. As indicated by the superimposed compass points, this rotation process includes aligning trough reflector 101 in a generally east-west direction during a sunrise time period (depicted in Fig. 4(A)), aligning trough reflector 101 in a generally north-south direction during a midday time period (depicted in Fig. 4(B)), and aligning trough reflector 101 in a generally east-west direction during a sunset time period (depicted in Fig. 4(C)). This process clearly differs from conventional commercial trough arrays that rotate around a horizontal axis and remain aligned in a generally north-south direction throughout the day. The inventors note that some conventional commercial trough arrays are aligned in a generally east-west direction (as opposed to north-south, as is customary), and adjust the tilt angle of their trough reflectors south to north to account for the changing positions of the sun between summer to winter, i.e., instead of pivoting 180 degrees east to west from morning to evening. However, unlike the architecture in this invention, these east-west aligned trough arrays do not rotate their troughs around perpendicular axes. Also, in many part of the world the sun moves along an arc in the sky. Thus, even though the angular correction is small, over the course of a day the east-west aligned troughs still have to pivot along their focal line to keep the focused sunlight from drifting off.

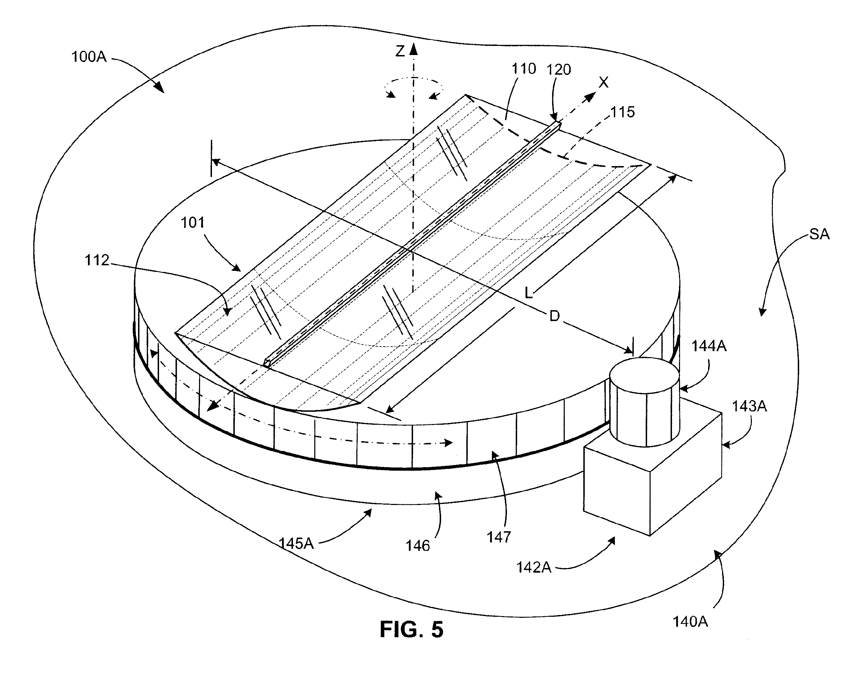

Fig. 5 is a perspective view showing a solar-electricity generation device (apparatus) 100A according to a specific embodiment of the present invention. Similar to the embodiments described above, device 100A generally includes a trough reflector 101, having a mirror 130 disposed on a convex lower surface 115 of a solid optical element 110 that is shaped to reflect solar (light) beams B onto a focal line FL, and a photoreceptor 120 fixed mounted on an upper aperture surface 112 of solid optical element 110 along focal line FL. However, device 100A differs from the earlier embodiments in that it includes a tracking system 140A having a circular (e.g., disk-shaped) base structure 145A for rotatably supporting trough reflector 101, and a peripherally positioned drive system 142A for rotating trough reflector 101 relative to the underlying support surface SA.

According to an aspect of the disclosed embodiment, circular base structure 145A facilitates utilizing device 100A in residential settings by distributing the weight of trough reflector 101 over a larger area. In the disclosed embodiment, circular base structure 145A includes a fixed base 146A that is fixedly mounted onto support surface SA, and a movable support 147 that rotates on fixed base 146 by way of a track (not shown) such that trough reflector 101 rotates around vertical axis Z. Although shown as a solid disk, those skilled in the art will recognize that a hollow (annular) structure may be used to reduce weight, further facilitating the installation of device 100A onto a residential house without requiring modifications to the rooftop support structure.

In accordance with another aspect of the present embodiment, trough reflector 101 has a longitudinal length L measured parallel to focal line FL, and base structure 145A has a peripheral edge defining a diameter D that is that is greater than or equal to longitudinal length L. By making the diameter of base structure 145A as wide as possible, the weight of device 100A may be distributed over a larger portion of underlying support surface SA, thereby reducing engineering requirements and further facilitating residential rooftop installation. This is further supported by the fact that any rotation affects all troughs on a circular structure equally, whereas through a long torsional linkage the trough sections away from the driving gear may not focus properly due to wind loading or gravity.

In accordance with yet another aspect of the present embodiment, peripherally positioned drive system 142A includes a motor 143A and a gear 144A (or other linking mechanism) that is coupled to a corresponding gear/structure disposed on the peripheral edge of movable support 147. This arrangement provides a solar parabolic trough reflector design that is small in size, uses only one motor 143A to rotate movable support (circular disc) 147 that may have a several meter-square surface area, and can be mounted on slanted residential roof because the rotation is kept within the plane of the roof.

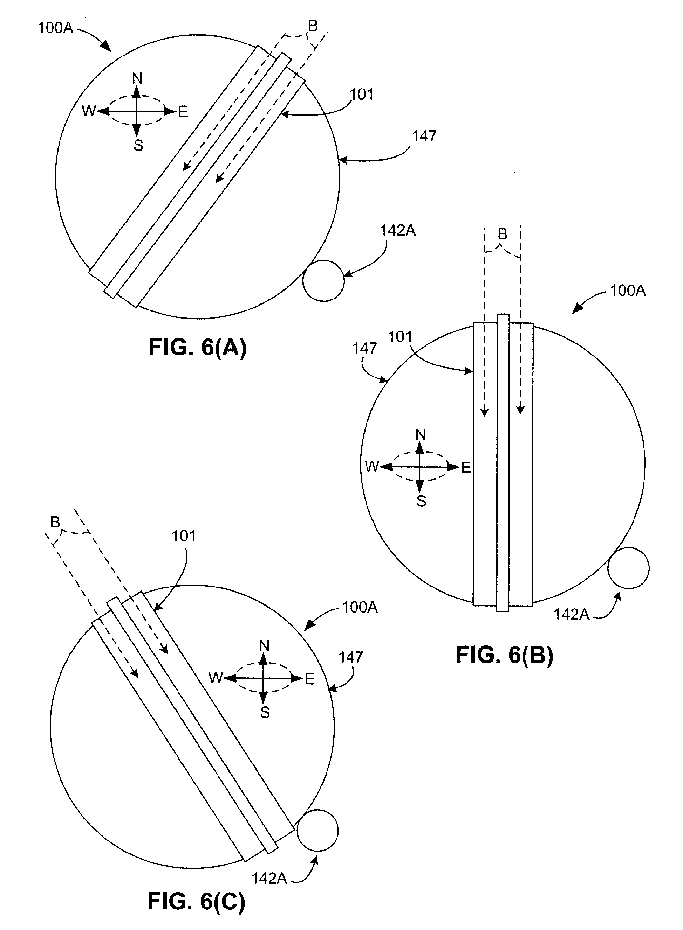

Referring to Figs. 6(A) to 6(C), which show device 100A during operation, tracking system 140A may also include a sensor or feedback system (not shown) that detect a position of the sun relative to trough reflector 101, and cause drive system 142A (e.g., motor 143A and gear 144A; see Fig. 5) to apply torque to the peripheral edge of movable support 147 such that trough reflector 101 is rotated into a position in which the focal line FL is parallel to solar beams B generated by the sun in the manner described above. Because engineering requirements to withstand wind and gravity on a rotating platform is kept to a minimum, and because the motor is not required to rotate at high speeds, this arrangement minimizes the torque required by motor 143A that is needed to rotate trough reflector 101 around vertical axis Z, thereby reducing the cost of tracking system 140A. Moreover, this arrangement may be extended to turn several circular disks simultaneously using a single motor, further extending the efficiency of the overall system.

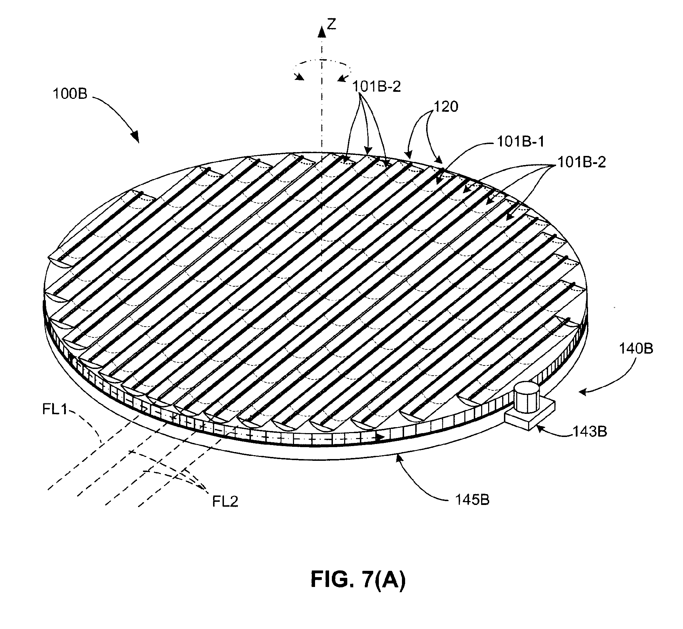

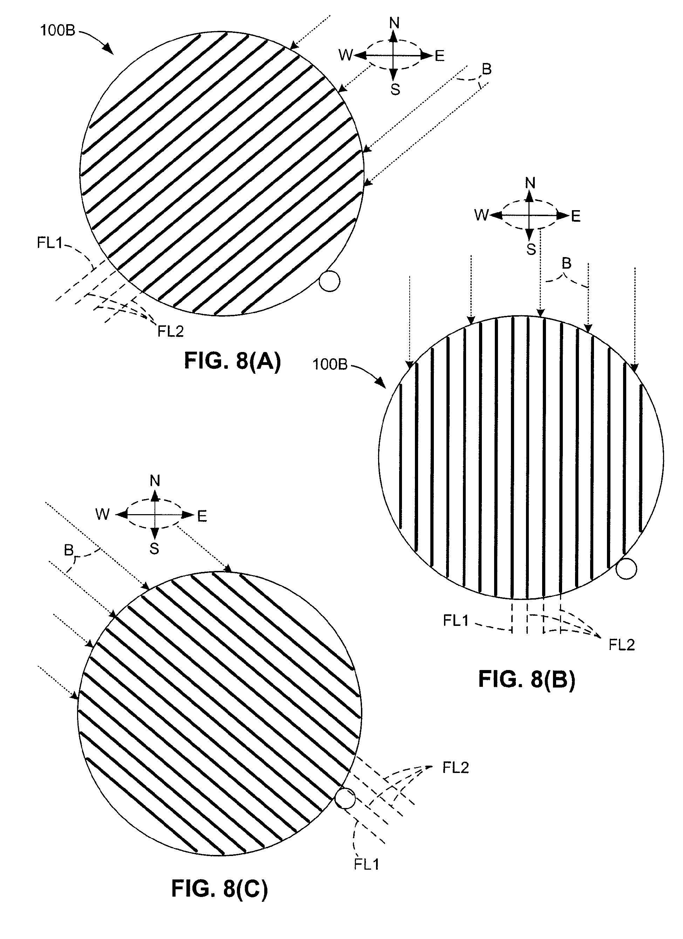

Fig. 7(A) is a top side perspective view showing a solar-electricity generation device (array) 100B according to another specific embodiment of the present invention. Similar to device 100A (described above), device 100B utilizes a tracking system 140B having a circular base structure 145B and a peripherally positioned drive system 142B for rotating circular base structure 145B relative to an underlying support surface around an axis Z. However, device 100B differs from previous embodiments in that, in addition to a centrally-disposed trough reflector 101B-1 similar to that used in device 100A, device 100B includes one or more additional (second) trough reflectors 101B-2 that are fixedly coupled to circular base structure 145B, where the focal lines FL2 of each additional trough reflectors 101B-2 is parallel to the focal line FB1 of trough reflector 101B-1. According to this embodiment, the multiple trough reflectors 101B-1 and 101B-2 are rotated by a single small motor 143B mounted on the peripheral edge circular base structure 145B using very little power in comparison to that needed in conventional trough reflector arrangements. The weight of trough reflectors 101B-1 and 101B-2 is thus spread by circular base structure 145B over a large area, further facilitating rooftop mounting. The low profile and in-plane rotation of the trough reflectors reduces the chance of wind and storm damage in comparison to conventional trough reflector arrangements. Referring to Figs. 8(A) to 8(C), device 100B is rotated in operation similar to the embodiments described above, but all focal lines FL1 and FL2 are aligned parallel to the projections of solar beams B onto the rotating disc.

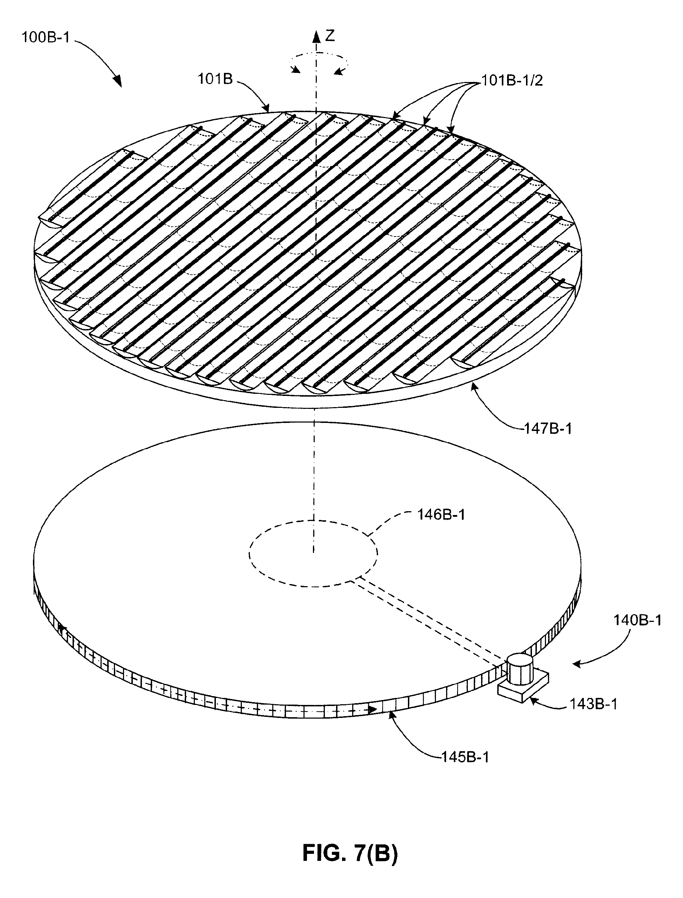

Fig. 7(B) is a top side perspective view showing a solar-electricity generation device (array) 100B-1 according to an alternative specific embodiment of the present invention. Similar to device 100B (described above), device 100B-1 utilizes a tracking system 140B-1 having a circular turntable 145B-1 that is rotatably supported on a central bearing 146B-1, and a peripherally positioned drive system 142B for rotating circular base structure 145B relative to an underlying support surface around an axis Z. Device 100B-1 differs from device 100B in that the trough reflector array 101B (which is essentially identical to the array described above with reference to Fig. 7(A)) includes multiple troughs 101B-1/2 that are fixedly mounted on a platen (support frame) 147B-1 using low-cost manufacturing techniques, which in turn is removably mounted onto turntable (base structure) 145B-1 that is fixedly connected to the underlying support surface. In addition to the advantages described above with reference to Fig. 7(A), this arrangement provides the additional advantage of providing a very low cost system that includes a permanent, robust positioning component and easily replaceable, low-cost solar collector component. That is, in one embodiment, trough reflector array 101B is designed with quick disconnects for mounting, e.g., onto turntable 145B-1, but has a reduced lifetime (due to the low cost materials used, such as polymers, which will degrade more rapidly in outdoor use) and will be scheduled to be replaced at intervals.

In accordance with a residential embodiment of the invention (and in some commercial and utility embodiments as well), each trough reflector 101B-1 and 101B-2 has a width of approximately one inch, a thickness of approximately one-half inch, and a length of a few feet, depending on where they are mounted on a rotating disc which is in turn mounted onto a roof top, with circular base structure 145B being approximately four feet in diameter. These specific dimensions are chosen to keep the overall thickness to be within a few inches above the rooftop, and to minimize production costs. The dish rotates to focus sun's ray but the rotation stays in the plane of the substrate, and need not rise out of plane so mechanical requirement is much reduced than conventional solar arrays. By referring to the rooftop as substrate, the inventors wish to emphasize that devices produced in accordance with the present invention do not require a substantial foundation to withstand wind and storm; second, the concentrators need not take away inhabitable space; third, packing density is almost 1:1, just like ordinary rooftop solar panels.

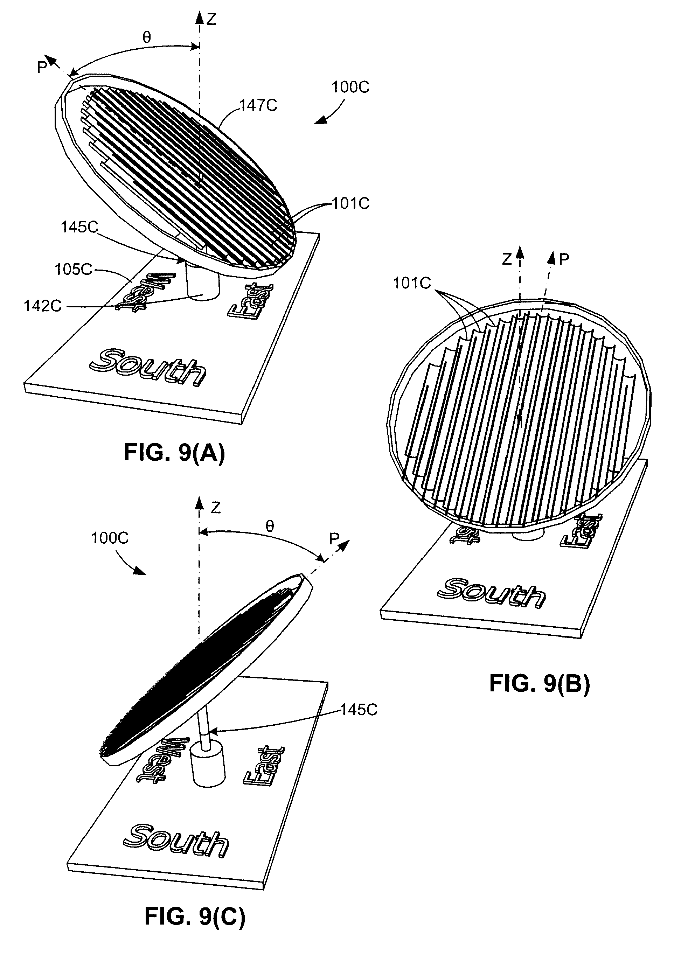

Figs. 9(A), and 9(B) and 9(C) are simplified top side perspective views showing a solar-electricity generation device 100C according to another specific embodiment of the present invention. Similar to device 100B (described above), device 100C utilizes a tracking system having a circular support structure 147C that supports multiple trough reflectors 110C in a parallel arrangement, and a centrally positioned drive system 142C for rotating circular support structure 147C relative to an underlying support surface 105C around an axis Z defined by a support/drive shaft 145C. Device 100C differs from previous embodiments in that circular support structure 147C is disposed in a raised, angled position by support/drive shaft 145C such that the plane defined by disc-shaped support structure 147C defines an angle θ with reference to axis Z, whereby support structure 147C is turned by a motor (drive system 142C) such that trough reflectors 110C are collectively directed to face east, north and west throughout the day, as depicted in Figs. 9(A), and 9(B) and 9(C). Note that trough reflectors 110C are aligned within circular support structure 147C such that the focal line of each trough reflector 101C is maintained at angle θ as circular support structure 147C is rotated around axis Z. Although raising and tilting the plane defined by circular support structure 147C potentially increases wind effects over the perpendicular arrangement described above with reference to Figs. 5-8, the raised arrangement utilized by solar-electricity generation device 100C may provide better solar light conversion that may be useful is some commercial applications.

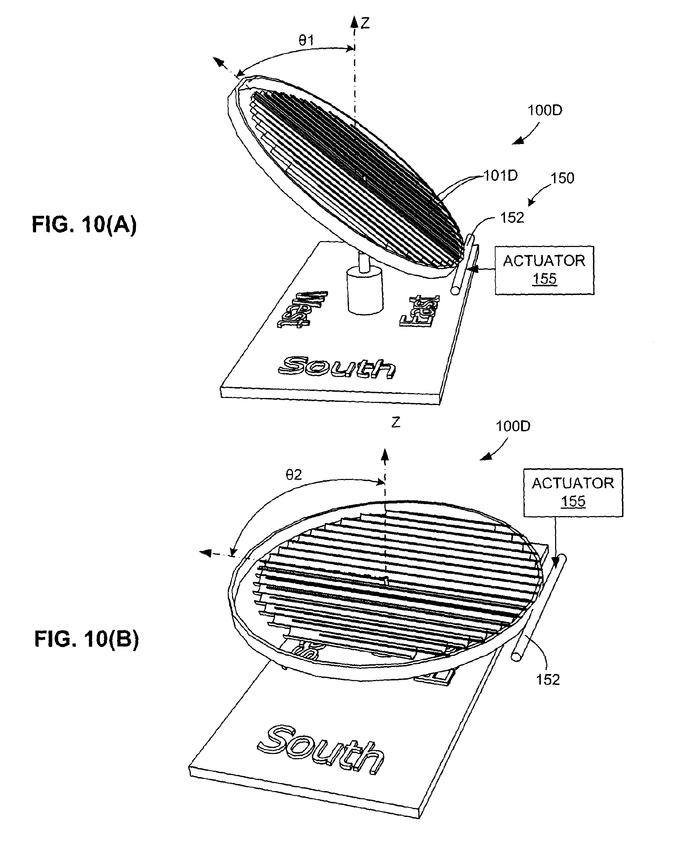

Figs. 10(A) and 10(B) are simplified top side perspective views showing a solar-electricity generation device 100D according to another specific embodiment of the present invention. Similar to device 100C (described above), device 100D rotates multiple trough reflectors 101D around a vertical axis Z, but additionally the trough array includes a tilt mechanism 150 (indicated by horizontal bar 152 and simplified actuator 155) that facilitates tilt adjustment to a predetermined angle around a horizontal axis X so as to compensate for latitude and the resulting non-ideal zenith angle. For example, tilt mechanism 150 facilitates adjusting trough reflectors 101D between an approximately 45° tilt angle θ1 (shown Fig. 10(A)) and an approximately 90° tilt angle θ2 (shown Fig. 10(B)). Once the tilt angle is set by tilt mechanism 150 for a particular latitude and time of year, device 100D operates as described above (i.e., rotated around vertical axis Z during the course of a day). The advantage of providing tilt mechanism 150 is to save on build material when troughs operate in high-latitude regions. Anemometers and possibly other networked sensors are used to determine climate conditions. When the wind speed is stronger than a predetermined amount, tilt mechanism operates to lower the trough array to horizontal position, where trough reflectors 101D can continue to track and collect solar energy, albeit at a reduced efficiency. This feature provides an advantage over a two-axis tracking arrangement because the tilt angle is fixed at either the full-tilt angle, or horizontal. The ability to tilt also allows an otherwise horizontal array to get rid of accumulated snow, which is frequent seen in many high-latitude regions of the world.

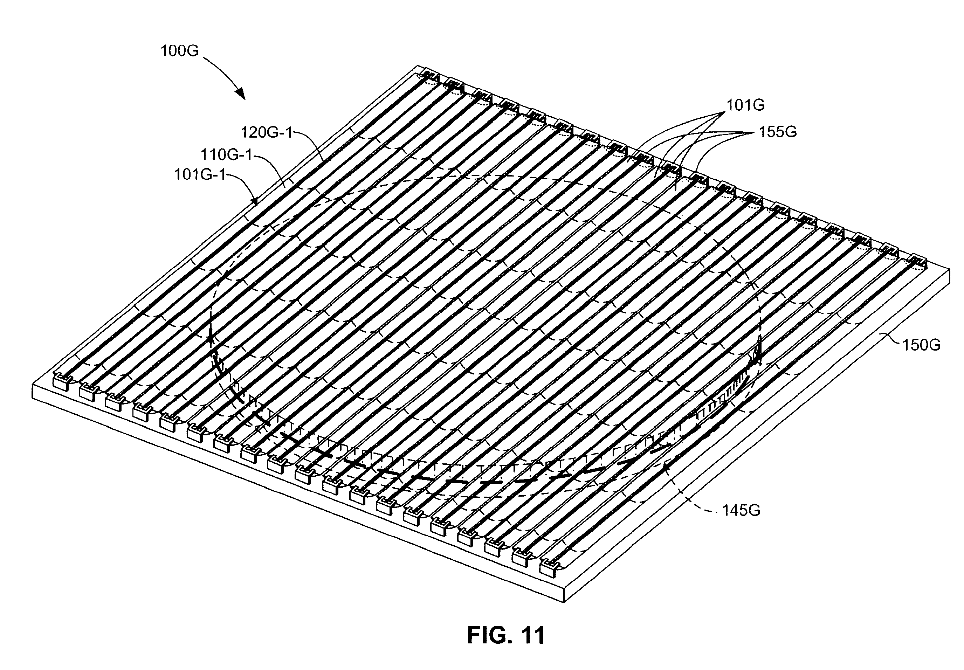

Fig. 11 is a top side perspective view showing a solar-electricity generation array 100G according to yet another specific embodiment of the present invention. Similar to device 100B, array 100G utilizes a tracking system having a circular base structure 145B and a peripherally positioned drive system (not shown), and multiple parallel trough reflectors 101G that are fixedly coupled to circular base structure 145B such that rotation of circular base structure 145B causes rotation of all trough reflectors 101G in the manner described above. However, array 100G differs from device 100B in that all trough reflectors 101G have the same length, and all trough reflectors 101G are mounted onto a square or rectangular frame 150G, which is fixedly mounted over and rotated by circular base structure 145B. By providing each trough reflector 101G with the same length, the voltage generated from the string of PV cells disposed on each trough reflector 101G is approximately the same, thereby simplifying the electrical system associated with array 100G. In addition, providing each trough reflector 101G with the same length simplifies the production and assembly processes.

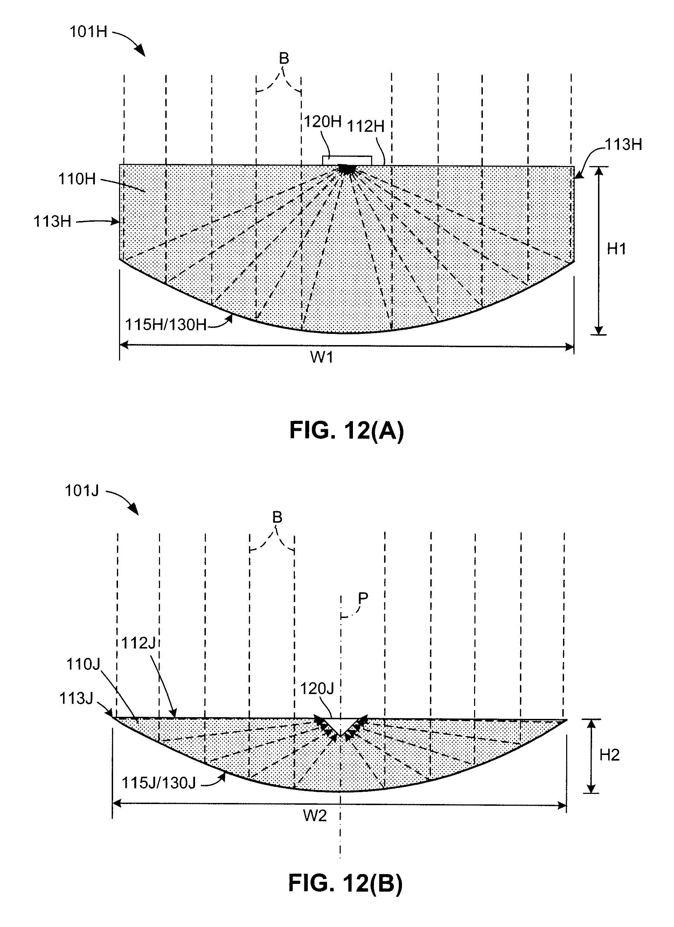

Figs. 12(A) to 12(D) are simplified cross-sectional views showing trough reflectors according to additional specific embodiments of the present invention.

Fig. 12(A) shows a trough reflector 101H having an optical element 110H in which upper aperture surface 112H and lower convex surface 115H are separated by vertical sidewall surfaces 113H. A width W1 of element 101H is one inch, and a height H1 from bottom to top is 0.375". Convex surface 115H is shaped such that light beams B reflected by mirror 130H is focused onto a receiver 120H having a width of 0.1", but this width is arbitrary and can be changed depending on a desired concentration ratio.

Fig. 12(B) shows a trough reflector 101J having a lower profile but a more complicated wedge-like shaped PV receiver according to another specific embodiment of the present invention. In particular, trough reflector 101J includes an optical element 110J in which upper aperture surface 112J and lower convex surface 115J meet along a wedge-shaped side edge 113J. A width W2 of element 101H is again set approximately one inch, but a height H2 from bottom to top is approximately 0.25", and a width of PV receiver 120J is arbitrarily set at approximately 0.1". Note that receiver 120J is angled and set in a V-shaped groove defined in the central region of upper aperture surface 112J to avoid loss on the receiver surface due to the low angle light scattering of beams B, and that this approach does increase the total receiver surface area. Another alternate design would include an optical element similar to element 110J, but split exactly in half vertically (e.g., along plane P) so that the single element would collect and concentrate light on an angled receiver on one edge of the element.

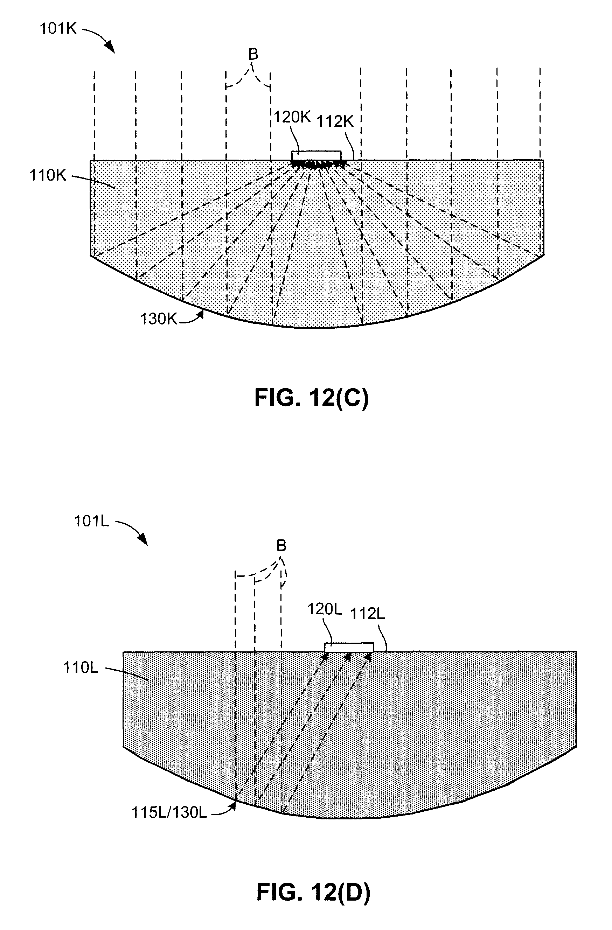

One of the problems all solar concentrators must address is excessive concentration of the light on the receiver or on other optical components which might be damaged by the resulting heat. Fig. 12(C) shows a trough reflector 101K according to another specific embodiment of the present invention in which optical element 110K is formed such that PV receiver 120K is positioned by surface 112K slightly above or preferably, slightly below the focal line defined by mirror 130K to better distribute the reflected light beams B across its active surface in order to more uniformly and fully illuminate the receiver.

Fig. 12(D) shows a trough reflector 101L according to another exemplary embodiment in which an optical element 110L includes a faceted convex surface 115L and a resulting faceted mirror 130K that restrict the concentration of reflected light. In this manner, PV receiver 120L and other optics can never experience greater than the desired optical concentration regardless of misalignment of the array, tracking system, or placement of the receiver. The illumination generated by beams B reflected from only one such facet is highlighted for clarity.

As set forth above, the present invention provides an improved solar power system that incorporates a trough reflector arrangement with a Z-axis rotated tracking mechanism and a solid optical element that combines the functions of defining the reflector surface, supporting the photovoltaic receiver at the correct optical focus, and protecting both reflector and receiver from environmental damage. In addition, the present invention facilitates significant reduction in the mass-to-power ratio of a solar power system, with a concomitant reduction in cost.

Although the present invention has been described with respect to certain specific embodiments, it will be clear to those skilled in the art that the inventive features of the present invention are applicable to other embodiments as well, all of which are intended to fall within the scope of the present invention.

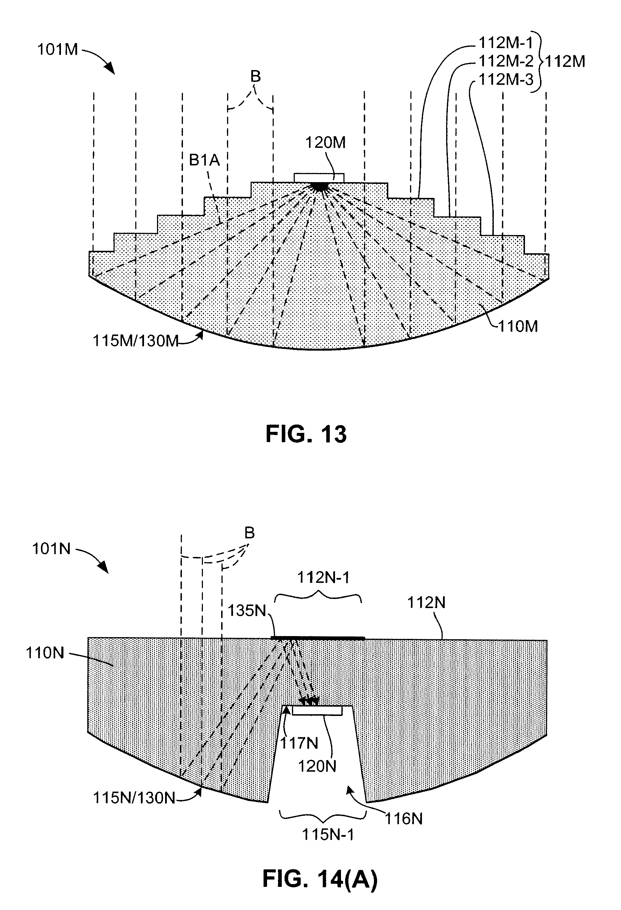

For example, Fig. 13 is a simplified end view showing a trough reflector 101M according to another exemplary embodiment in which an optical element 110M includes an upper aperture surface 112M that is formed by a stepped series of parallel surface sections (e.g., sections 112M-1, 112M-2 and 112M-3). This arrangement reduces the amount of material (e.g., polymer) needed to form optical element 110M. Note that the aperture surface sections (e.g., 112M-1, 112M-2 and 112M-3) must be flat to avoid refractive distortion. In addition the lowermost points of the step arrangement must remain above the internal optical path of the reflected light (e.g., above reflected light beam B1A).

Figs. 14(A) to 14(C) are simplified end view showing trough reflectors according to alternative embodiments in which a second mirror is disposed along the central linear region of the upper aperture surface, and the solar-energy collection elements are disposed below the aperture surface (i.e., inside or below the optical element).

Fig. 14(A) shows a trough reflector 101N in which an optical element 110N includes a second mirror 135N disposed in a central linear region 112N-1 of upper aperture surface 112N. Second mirror 135N is aligned such that light beams B passing through upper aperture surface 112N and reflected by lower (primary) mirror 130N are directed onto second mirror 125N, and second mirror 135N redirects the light beams downward toward a central region 115N-1 of convex surface 115N. In this embodiment, second mirror 135N is flat and disposed on linear central region 112N-1 of aperture surface 112N. Optical element 110N also defines a groove 116N disposed along the central region 115N-1 of convex surface 115N, and a solar-energy collection element 120N is disposed on an inside surface 117N of groove 116N, whereby light reflected by second mirror 135N is directed onto solar-energy collection element 120N. This arrangement adds complexity, cost, and optical losses, and suffers from increased shadowing due to the large secondary mirror, but might allow more room for a heat sink (not shown) located below optical element 110N, and can make aperture surface 112N easier to clean.

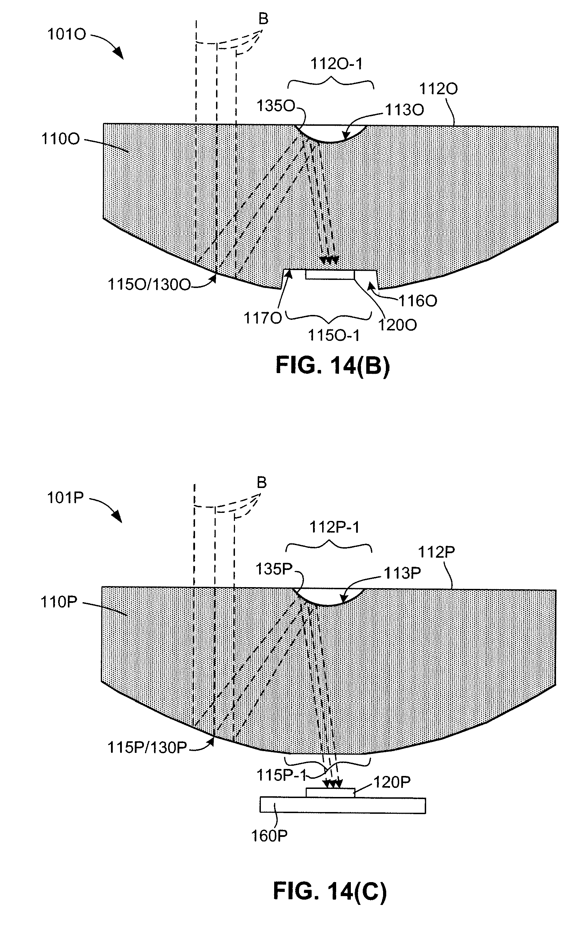

Fig. 14(B) shows a trough reflector 1010 according to an alternative embodiment in which an optical element 1100 includes a parabolic cylindrical second mirror 1350 disposed in a groove 1130 defined along a central linear region 1120-1 of upper aperture surface 1120. Second mirror 1350 is aligned such that light beams B passing through upper aperture surface 1120 and reflected by lower (primary) mirror 1300 are redirected and focused near a central region 1150-1 of convex surface 1150. In this embodiment, second mirror 1350 formed or otherwise disposed on the inside surface of groove 1130 in the same manner used to form convex mirror 1300, thereby providing the self-alignment benefits described above. This arrangement facilitates a shallower groove 1160 that is disposed along central region 1150-1 of convex surface 1150, thereby allowing solar-energy collection element 1200 to be disposed closer to convex surface 1150, which in turn facilitates the attachment of a heat sink structure (not shown) that is entirely disposed outside of groove 1160.

Fig. 14(C) shows a trough reflector 101P according to another alternative embodiment in which a solar-energy collection element 120P is fixedly mounted onto a heat exchanger 160P that is mounted to optical element 110P below central region 115P-1 of convex surface 115P (i.e., such that heat exchanger 160P and solar-energy collection element 120P move as a single structure with optical element 110P). Second mirror 135P is disposed in a groove 113P along central region 112P-1 of aperture surface 112P in a manner similar to that described above, with adjustments to the shape of mirror 135P being made to achieve the desired focal line. Note that mirror 130P does not cover central region 115P-1, thereby allowing beams B to pass through to solar-energy collection element 120P. Although this arrangement introduces an additional air/solid interface, the positioning of both solar-energy collection element 120P and heat exchanger 160P off of optical element 110P may prolong the life of trough reflector 101P by reducing the amount of thermal cycling.

Although the present invention is described above with specific reference to photovoltaic and solar thermal arrangements, other types of solar-energy collection elements may be utilized as well, such as a thermoelectric material (e.g., a thermocouple) that is disposed on the focal line of the trough arrangements described herein to receive concentrated sunlight, and to covert the resulting heat directly into electricity. In addition, optical elements like prisms and wedges that use reflection and/or total internal reflection to concentrate light into a linear or rectangular area can also be used instead of a trough reflector. In this case the photovoltaic cells are positioned off the long ends of the concentrating optical element where the light is being concentrated. Further, off-axis conic or aspheric reflector shapes may also be used to form a trough-like reflector. In this case the photovoltaic cells will still be positioned off the aligned parallel to the trough but will be positioned and tilted around the long axis of the trough. Referring to Fig. 1(B), the rotational axis Z is perpendicular to the focal line FL. However, this invention can be used in a system where the rotational axis and focal line FL are not perpendicular.

## Claims

1. An apparatus for solar-energy collection comprising:
a first trough reflector including:
a single-piece, solid optical element having a predominately flat upper aperture surface and a convex lower surface disposed opposite to the upper aperture surface;
a mirror that is conformally disposed on the convex lower surface, wherein the convex lower surface and mirror are arranged such that sunlight passing through the flat upper aperture surface is reflected and focused by the mirror onto a linear region of the upper aperture surface;
a linear solar-energy collection element, such as a photovoltaic material, a thermally efficient receiver tube, or a thermoelectric material, fixedly disposed to receive the focused light reflected by the mirror; and
means for rotating the first trough reflector around an axis, wherein the axis is non-parallel to the upper aperture surface.

2. The apparatus of claim 1,
wherein the solid optical element comprises a material, such as glass or plastic, having an index of refraction in the range of 1.05 and 2.09, and
wherein the mirror comprises one of a metal layer, such as silver or aluminium, that is deposited on the convex lower surface and a reflective film that is mounted on the convex lower surface.

3. The apparatus of claim 1 or claim 2, wherein said means comprises a tracking system including means for detecting a position of the sun relative to the first trough reflector, and means for rotating the first trough reflector such that the first focal line is parallel to solar beams generated by the sun that are directed onto the trough reflector.

4. The apparatus of any of the preceding claims,
wherein the convex lower surface and mirror are arranged such that sunlight passing through the flat upper aperture surface is reflected and focused by the mirror onto a first focal line that substantially coincides with the linear region of the upper aperture surface,
wherein the solar-energy collection element is disposed on the first focal line, and
wherein said axis is disposed substantially perpendicular to the first focal line such that the solar-energy collection element remains in a predetermined plane that is perpendicular to the axis when said first trough reflector rotates around said axis.

5. The apparatus of claim 4,
wherein the first trough reflector has a longitudinal length measured parallel to the focal line,
wherein said means comprises a base structure including means for rotating the base structure relative to an underlying support surface around said axis, and having a peripheral edge defining a diameter that is greater than or equal to the longitudinal length of said first trough reflector, and
wherein the first trough reflector is mounted on the circular base structure such that rotation of the base structure relative to said underlying support surface produces rotation of the first trough reflector around said axis.

6. The apparatus of claim 5, wherein said means comprises a tracking system including:
a drive system coupled to the peripheral edge of the base structure,
means for detecting a position of the sun relative to trough reflector, and
means for causing the drive system to apply torque to the peripheral edge of the base structure such that the trough reflector is rotated into a position in which the first focal line is parallel to solar beams generated by the sun that are directed onto the trough reflector.

7. The apparatus of claim 5 or claim 6, further comprising one or more second trough reflectors coupled to said base structure, each of said one or more second trough reflectors including an associated solid optical element including an associated mirror defining an associated focal line, and wherein the associated focal lines of the one or more second trough reflectors are parallel to the focal line defined by the mirror of the first trough reflector.

8. The apparatus of claim 7, wherein a length of each of the one or more second trough reflectors is substantially equal to a length of the first trough reflector.

9. The apparatus of any of the preceding claims, wherein the solar-energy collection element is angled and set in a V-shaped groove defined in the central region of upper aperture surface.

10. The apparatus of any of the preceding claims, wherein the solar-energy collection element is disposed at a position that is one of slightly above and slightly below the focal line defined by the mirror.

11. The apparatus of any of the preceding claims, wherein the predominately flat upper aperture surface comprises a stepped series of parallel flat surface sections.

12. The apparatus of any of the preceding claims, further comprising a second mirror disposed along the linear region of the upper aperture surface such that light reflected by the mirror conformally disposed on the convex lower surface is reflected onto the second mirror, and is subsequently reflected by the second mirror toward a central region of the convex surface, wherein the solar-energy collection element is disposed adjacent to the central region of the convex surface such that the light reflected by the second mirror is directed onto the solar-energy collection element.

13. The apparatus of claim 12, wherein the optical element defines an elongated groove disposed along and extending into the central region of the convex surface, and wherein the solar-energy collection element is fixedly mounted to a surface disposed inside the elongated groove.

14. The apparatus of claim 12 or claim 13, further comprising a heat exchanger fixedly mounted below the central region of the convex surface, wherein solar-energy collection element is fixedly mounted to the heat exchanger.

15. A method for generating solar-electricity using a first trough reflector, wherein the first trough reflector includes a single-piece, solid optical element having a predominately flat upper aperture surface and a convex lower surface disposed opposite to the upper aperture surface, a linear solar-energy collection element, and a mirror that is conformally disposed on the convex lower surface, wherein the convex lower surface and mirror are arranged such that sunlight passing through the flat upper aperture surface is reflected and focused by the mirror onto the linear solar-energy collection element, the method comprising:
disposing the first trough reflector on a planar support surface such that the linear solar-energy collection element defines an angle relative to the planar support surface; and
rotating the first trough reflector around an axis that is substantially perpendicular to the planar support surface, whereby the linear solar-energy collection element remains disposed at said angle relative to said planar surface while said first trough reflector rotates around said axis.
